# EUROPEAN PATENT APPLICATION

(11) **EP 1 986 347 A1**
(43) Date of publication of application: **29.10.2008**
(21) Application number: 07708300.4
(22) Date of filing: 09.02.2007
(51) Int. Cl.: H04B 7/26, H04B 1/707, H04J 11/00

(54) **MOBILE COMMUNICATION SYSTEM, MOBILE STATION DEVICE, BASE STATION DEVICE, AND MOBILE COMMUNICATION METHOD**

(30) Priority: 10.02.2006 JP 2006034513
(71) Applicant: Sharp Kabushiki Kaisha, Osaka-shi, Osaka 545-8522 (JP)
(72) Inventor: TSUBOI, Hidekazu, Chiba-shi, Chiba-ken (JP); OH, Wahoh, Chiba-shi, Chiba-ken (JP)
(74) Representative: Brown, Kenneth Richard
(86) International application number: PCT/JP2007/052364
(87) International publication number: WO 2007/091677

(57) **Abstract**

A mobile communication system of the present invention generates a gap section based on a channel quality indication, and determines the timing or the frequency of generating the gap section based on a given parameter between the base station device and the mobile station device.

## Description

### TECHNICAL FIELD

The present invention relates to a mobile communication system, a mobile station device, a base station device, and a mobile communication method, and more specifically, to a mobile communication system, a mobile station device, a base station device, and a mobile communication method for radio communication between cells to which the same radio frequency is allocated and which belong to cellular mobile communication systems of the same radio access technology, cells to which different radio frequencies are allocated, and cells belonging to cellular mobile communication systems of different radio access technologies (including cells to which the same radio frequency is allocated as well as cells to which different radio frequencies are allocated).
Priority is claimed on Japanese Patent Application No. 2006-034513, filed February 10, 2006, the content of which is incorporated herein by reference.

### BACKGROUND ART

In the cellular mobile communication system of the same RAT (radio access technology), plural base station devices are dispersed in a service area, each base station device forms a radio area called a cell, and a mobile station device is connected, through a radio channel, to the base station device in the cell to which the mobile station device belongs, thereby implementing the radio communication. Additionally, when the mobile station device moves to another cell during communication, HO (handover) is executed to continue the communication in the different cell.

The handover includes Intra-Freq-HO (Intra Frequency Handover) that is a handover between the same radio frequencies executed when the mobile station device moves between the cells to which the same radio frequencies are allocated, Inter-Freq-HO (Inter Frequency Handover) that is a handover between different frequencies executed when the mobile station device moves between the cells to which different radio frequencies are allocated.
In the cellular mobile communication systems of different wireless access technologies, there is Inter-RAT-HO (Inter RAT Handover) that is a handover between different radio access technologies executed when the mobile station device moves between the cells belonging to different radio access technologies. There is also Intra-RAT-HO (Intra RAT Handover) that is a handover between the cells belonging to the same radio access technology.

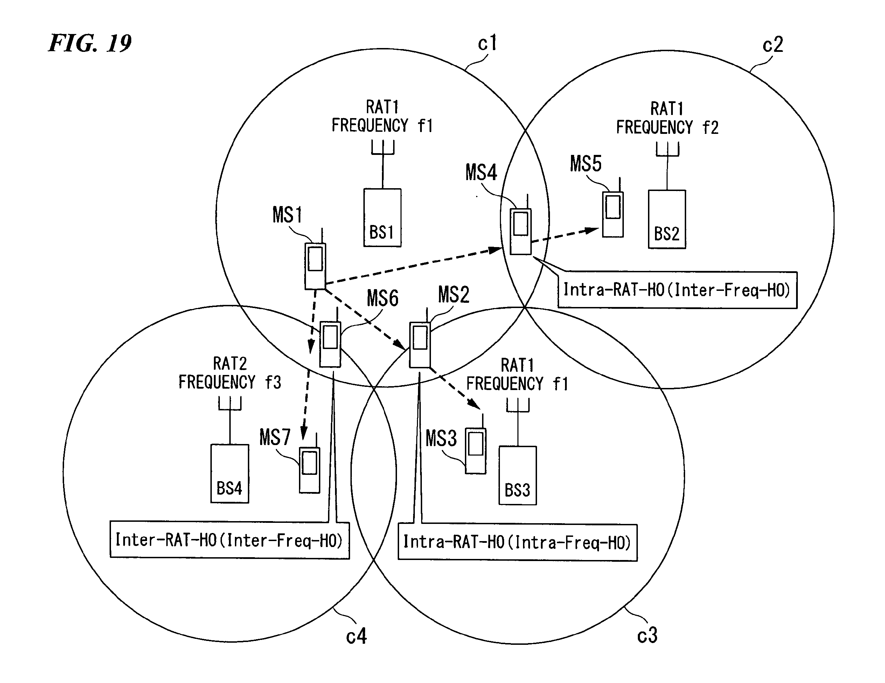

FIG. 19 is a schematic view showing handover processing when the mobile station device moves. Each base station device BS1, BS2, BS3, and BS4 is disposed on a two-dimensional plane. The base station devices BS1, BS2, BS3, and BS4 execute radio communication with mobile station devices using frequencies f1, f2, f1, and f3, respectively. The base station devices BS1, BS2, BS3, and BS4 execute the radio communication with the mobile station devices using radio access technologies RAT1, RAT1, RAT1, and RAT2, respectively.
The base station devices BS1, BS2, BS3, and BS4 can execute radio communication with mobile station devices MS1, MS2, MS4, and MS6, mobile station devices MS4 and MS5, mobile station devices MS2 and MS3, and mobile station devices MS6 and MS7, which are located in cells c1, c2, c3, and c4 that are radio communication-available areas.

The mobile station device MS4 moving between the cells c1 and c2 executes Intra-RAT-HO (and Inter-Freq-HO). The mobile station device MS2 moving between the cells c1 and c3 executes Intra-RAT-HO (and Intra-Freq-HO). The mobile station device MS6 moving between the cells c1 and c4 executes Inter-RAT-HO (and Inter-Freq-HO).

Conventionally, for example, the radio access technology of W-CDMA (Wideband Code Division Multiple Access) defined by 3GPP (3rd Generation Partnership Project) has been standardized as the third-generation cellular-mobile-communication method, and services thereof have started sequentially (see non-patent document 1). In the W-CDMA system, a compressed mode is defined as a function of monitoring or measuring a base station device utilizing a different frequency upon Intra-RAT-HO (and Inter-Freq-HO) or Inter-RAT-HO (and Inter-Freq-HO).

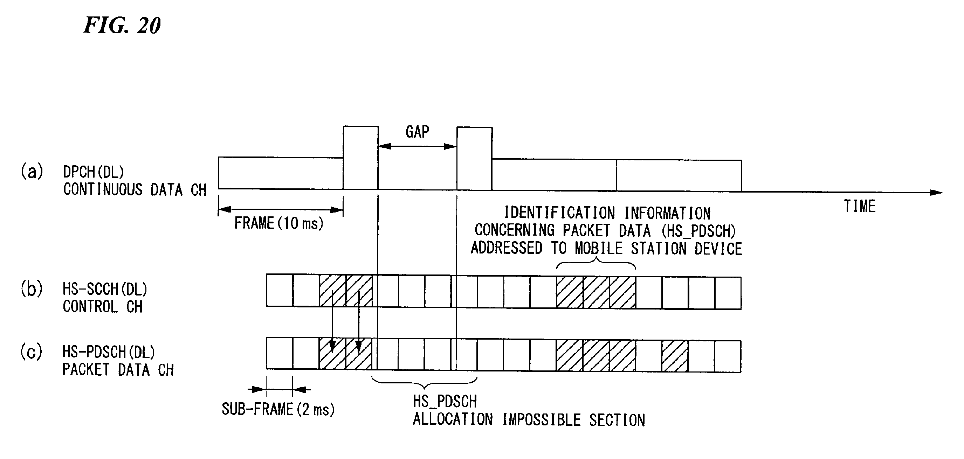

FIG. 20 (a) is a schematic view showing a case where the compressed mode is applied to a W-CDMA dedicated channel, and monitoring or measuring of the base station device utilizing the different frequency is executed. The base station device sets a gap section that is a transmission intermission as shown in FIG. 20 (a), and suspends data transmission over DPCH (dedicated physical channel) at the gap section. On the other hand, the mobile station device switches the frequency utilizing the gap section, and monitors the base station device utilizing the different frequency.

In 3 GPP, HSDPA (High Speed Downlink Packet Access) that implements high-speed downlink packet transmission of approximate maximum transmission speed of 14. 4 Mbps that is the expansion of the W-CDMA radio interface is standardized (see non-patent document 2). In the downlink, HS-SCCH (High Speed-Downlink Shared Control Channel), HS-PDSCH (High Speed-Physical Downlink Shared Channel) are additionally defined as independent channels different from the dedicated channel to which the compressed mode is normally applied. In the uplink, HS-DPCCH (High Speed Dedicated Physical Control Channel) is defined additionally.

AMCS (Adaptive Modulation and Coding Scheme) is adopted in HSDPA. The AMCS is a method in which radio transmission parameters, such as the data-modulation multiple-value number of the shared data channel, an error correcting method, an error-correction encoding ratio, the data-modulation multiple-value number, a code spreading factor of time and frequency axes, and the multi-code multiplexed number, are switched according to a downlink CQI (Channel Quality Indication) that is a propagation path condition of each mobile station device to efficiently execute the high-speed packet-data transmission. Additionally, HARQ (Hybrid Automatic Repeat reQuest) is adopted. The mobile station device feeds ACK/NACK (Acknowledgement/Negative Acknowledgement) that is received transmittal confirmation information, and the CQI back to the base station device over the dedicated control channel.

FIGS. 20 (b) and 20 (c) are schematic views showing an example of a packet signal transmitted from the base station device to the mobile station device. FIG. 20 (b) is a schematic view showing an example of a shared control channel transmitted from the base station device to the mobile station device. FIG. 20 (c) is a schematic view showing an example of the shared data channel transmitted from the base station device to the mobile station device.
Also in HSDPA, when the monitoring or the measuring of the base station device utilizing the different frequency is executed, data transmission to/from the base station device cannot be executed on the mobile station device side. Therefore, allocation of packet data addressed to the mobile station device is not executed for an interval of the shared data channel corresponding to the gap section. Before the gap section is generated, the base station device side instructs the mobile station device side to suspend the data allocation of the shared data channel using the shared control channel. The mobile station device that has received the instruction generates a gap section, and monitors or measures the base station device utilizing the different frequency (including a case of monitoring or measuring another base station device utilizing the same frequency).
In other words, in the case of FIG 20 (a), the gap section is generated by data compression, etc., with respect to continuous data addressed to a mobile station device. In the case of FIGS. 20 (b) and 20 (c), the gap section is generated by not allocating a packet control signal and packet data that are addressed to the mobile station device to the gap section.

Currently, EUTRA (Evolved Universal Terrestrial Radio Access) and EUTRAN (Evolved Universal Terrestrial Radio Access Network) are under consideration. In addition, OFDMA (Orthogonal Frequency Division Multiplexing Access) is proposed as EUTRA downlink. The AMCS technology is applied to the OFDMA system as the EUTRA technology (see non-patent documents 3 and 4).
In addition, a downlink radio-frame configuration and a radio-channel mapping method are proposed in EUTRA (see non-patent document 4).

As a gap control method for monitoring or measuring the base station device utilizing the different frequency upon Intra-RAT-HO (and Intra-Freq-HO) and Inter-RAT-HO (and Inter-Freq-HO) of EUTRA/EUTRAN, a gap control method based on a signaling control by the base station device and the mobile station device similar to HSDPA and the autonomous gap control method based on measuring an instantaneous CQI sample and feedback thereof to the base station device that are executed by the mobile station device are proposed (see non-patent document 5).

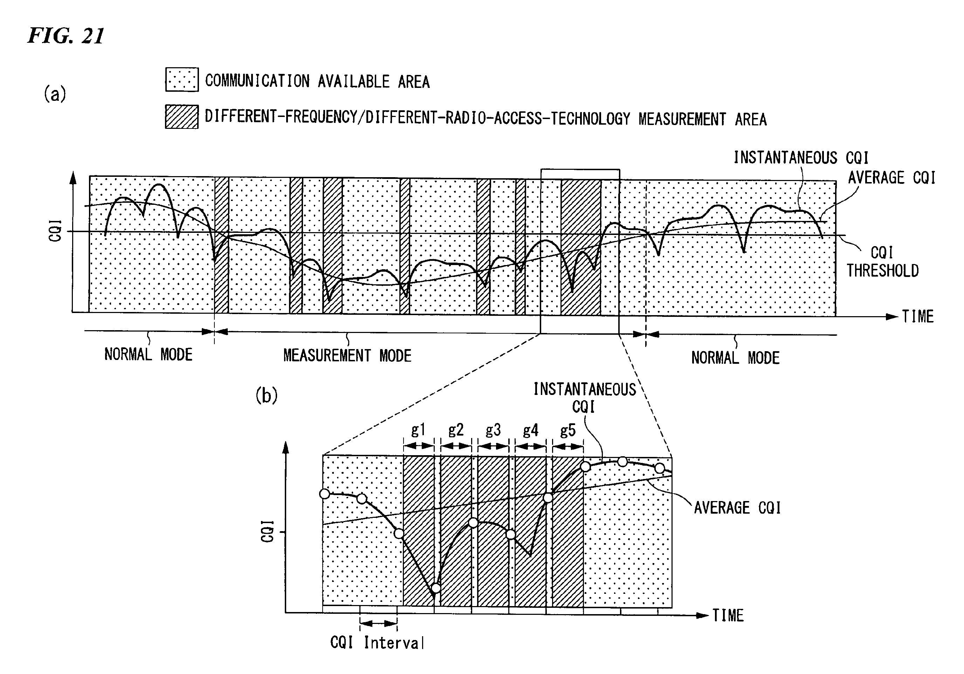

FIGS. 21 (a) and 21 (b) are schematic views showing an example of the gap control method that has been proposed conventionally. The mobile station device receives a shared pilot channel, measures an instantaneous CQI at a given interval of CQI_Interval, and reports the measured instantaneous CQI to the base station device. At the same time, the mobile station device calculates an average CQI by averaging the instantaneous CQIs at a given period (system parameter). The mobile station device compares the average CQI with a CQI threshold of the system parameter. When the average CQI is greater than the CQI threshold, the mobile station device sets a normal mode. When the average CQI is less than the CQI threshold, the mobile station device sets a measurement mode for monitoring or measuring the base station device utilizing the different frequency.

When the measured instantaneous CQI is smaller than the average CQI in the measurement mode, the mobile station device suspends reception or transmission at the frequency utilized by the connected base station device, and generates a gap section.
Similar to the mobile station device, the base station device receives the report of the instantaneous CQI, and calculates an average CQI of the mobile station device. The calculated average CQI is compared with a CQI threshold of a system parameter. When the average CQI is greater than the CQI threshold, the base station device sets the normal mode. When the average CQI is less than the CQI threshold, the base station device sets a measurement mode for monitoring or measuring the base station utilizing the different frequency. When the measured instantaneous CQI is smaller than the average CQI in the measurement mode, the base station device suspends the transmission of packet data addressed to the connected mobile station device, and generates a gap section. As shown in FIG. 21 (a), the mobile station device terminates the gap section after the completion of the monitoring or the measuring of the different frequency or the base station device, and resumes the measuring of an instantaneous CQI and the report of the measured instantaneous CQI. Then, the mobile station device continues similar processing. FIG. 21 (b) shows a state where plural gaps g1 to g5 are generated continuously.
Non-patent Document 1: "W-CDMA Mobile Communication System" by Keiji Tachikawa, ISBN 4-621-04894-5
Non-patent Document 2: 3GPP TR (Technical Report) 25.858, and 3GPP HSDPA-specification-related document (http://www.3gpp.org/ftp/Specs/html-info/25-series.htm)
Non-patent Document 3: 3GPP TR (Technical Report) 25.913, V2.1.0 (2005-05) , Requirements for evolved Universal Terrestrial Radio Access (UTRA) and Universal Terrestrial Radio Access Network (UTRAN) (http://www.3gpp.org/ftp/Specs/html-info/25913.htm)
Non-patent Document 4: 3GPP TR (Technical Report) 25.814, V0.4.2 (2005-05) , Physical Layer Aspects for Evolved UTRA (http://www.3gpp.org/ftp/Specs/html-info/25814.htm)
Non-patent Document 5: NTT DoCoMo, Inc. "Measurement for LTE Intra-and Inter-RAT Mobility", 3GPP TSG RAN WG2 Meeting # 50, Sophia Antipolis, France, 9-13 January, 2006

### DISCLOSURE OF INVENTION

### Problems to be Solved by the Invention

Although the autonomous gap generation method for monitoring or measuring the base station device utilizing the different frequency upon Intra-RAT-HO (and Inter-Freq-HO) and Inter-RAT-HO (and Inter-Freq-HO) of EUTRA/EUTRAN is disclosed in non-patent document 5, a gap-generation-period control method or a gap-generation-frequency control method is not disclosed.

The operation state of the mobile station device includes, for example, an idle mode that is a state where packet data communication is not in execution and an active mode that is a state where packet data communication is in execution. In addition, a movement of the mobile station device and a change in the traveling speed cause changes of the position in a cell, radio wave environment, and the like. In the idle mode, the monitoring or the measurement period of the base station device provided around the mobile station device is set large (for example, a period of a few seconds) for lower power consumption. In the active mode, transmission speed and transmission frequency of packet data differs depending on requirement conditions of service category (for example, VOIP (Voice over Internet Protocol), a video phone, a web-page browsing, etc.) and QoS (Quality of Service), for example. In other words, the instantaneous-CQI measurement period differs. In addition, when propagation path loss at a cell edge and fading variation are extensive, a requirement for the instantaneous-CQI measurement period in the measurement mode varies according to, for example, a scheduling algorithm of packet data.

The present invention is made in view of the above circumstances, and an object of the present invention is to provide a mobile communication system, a mobile station device, a base station device, and a mobile communication method that can reduce power consumption by varying gap generation timing according to whether the mobile device is in the measurement mode or in the normal mode.

### Means for Solving the Problems

To solve the above problems, a mobile communication system of the present invention generates a gap section based on a channel quality indication, and determines the timing or the frequency of generating the gap section based on a given parameter between a base station device and a mobile station device.

The mobile communication system of an aspect of the present invention uses, as the given parameter, a gap generation intermission that is an interval for which the gap section is not generated.

A mobile communication system of an aspect of the present invention includes a mobile station device and a base station device, the mobile station device including: a first measuring unit that measures a predetermined time; and a first generating unit that generates a gap section when it is determined to monitor a peripheral base station device based on a channel quality indication, and then suspends generating another gap section from when the generation of the gap section is initiated to when the first measuring unit finishes measuring the predetermined time, and the base station device including: a second measuring unit that measures a predetermined period; and a second generating unit that generates a gap section within which the base station device does not communicate with the mobile station device when it is determined to monitor the peripheral base station device based on the channel quality indication of the mobile station device, and then suspends generating another gap section from when the generation of the gap section is initiated to when the second measuring unit finishes measuring the predetermined period.

A mobile communication system of an aspect of the present invention includes a mobile station device and a base station device, the mobile station device including: a first measuring unit that measures a predetermined time; a first generating unit that generates a gap section when it is determined to monitor a peripheral base station device based on a channel quality indication, and then suspends generating another gap section from when the generation of the gap section is initiated to when the first measuring unit finishes measuring the predetermined time; and a notifying unit that notifies the base station device of a gap-generation control signal, and the base station device including: a radio unit that receives the gap-generation control signal from the mobile station device; and a second generating unit that generates a gap section within which the base station device dose not communicate with the mobile station device when the gap-generation control signal is received.

A mobile station device of an aspect of the present invention wirelessly communicates with a base station device, and includes: a first measuring unit that measures a predetermined time; and a first generating unit that generates a gap section when it is determined to monitor a peripheral base station device based on a channel quality indication, and then suspends generating another gap section from when the generation of the gap section is initiated to when the first measuring unit finishes measuring the predetermined time.

A mobile station device of an aspect of the present invention wirelessly communicates with a base station device, and includes: a first measuring unit that measures a predetermined time; a first generating unit that generates a gap section when it is determined to monitor a peripheral base station device based on a channel quality indication, and then suspends generating another gap section from when the generation of the gap section is initiated to when the first measuring unit finishes measuring the predetermined time; and a notifying unit that notifies the base station device of a gap section generation.

The mobile station device of an aspect of the present invention further includes: a first communication unit that transmits, to the base station device, downlink instantaneous channel-quality-indication values from the base station device to the mobile station device; a first calculating unit that calculates an average value of the instantaneous channel-quality-indication values for a given period; and a first setting unit that sets the predetermined time based on a temporal transition of the average value.

The first setting unit of the mobile station device of an aspect of the present invention sets the predetermined time based on the average value.

The setting unit of the mobile station device of an aspect of the present invention sets the predetermined time based on the temporal transition of the average value and the average value.

A base station device of an aspect of the present invention wirelessly communicates with a mobile station device, and includes: a second measuring unit that measures a predetermined period; and a second generating unit that generates a gap section in which the base station device ceases to communicate with the mobile station device when it is determined to monitor a peripheral base station device based on a channel quality indication of the mobile station device, and then suspends generating another gap section from when the generation of the gap section is initiated to when the second measuring unit finishes measuring the predetermined time.

A base station device of an aspect of the present invention wirelessly communicates with a mobile station device, and includes: a radio unit that receives a gap generation signal from a mobile station device; and a second generating unit that generates a gap section in which the base station device ceases to communicate with the mobile station device when the gap generation signal is received.

The base station device of an aspect of the present invention further includes: a second communication unit that receives, from the mobile station device, downlink instantaneous channel-quality-indication values from the base station device to the mobile station device; a second calculating unit that calculates an average value of the instantaneous channel-quality-indication values for a given period; and a second setting unit that sets the predetermined period based on a temporal transition of the average value.

The second setting unit of the base station device of an aspect of the present invention sets the predetermined period based on the average value.

The second setting unit of the base station device of an aspect of the present invention sets the predetermined period based on a temporal transition of the average value and the average value.

A mobile communication method of an aspect of the present invention includes: generating a gap section when it is determined to monitor a peripheral base station device based on a channel quality indication; suspending another gap generation of a mobile station device from when the generation of the gap section is initiated to when a predetermined time has elapsed; generating a gap section in which a base station device ceases to communicate with the mobile station device when it is determined to monitor the peripheral base station device based on the channel quality indication of the mobile station device; and suspending another gap generation of the base station device when the generation of the second gap section is initiated to when a predetermined period has elapsed.

A mobile communication method of an aspect of the present invention includes: generating a gap section when it is determined to monitor a peripheral base station device based on a channel quality indication; suspending another gap generation of a mobile station device from when the generation of the first gap section is initiated to when a predetermined time has elapsed; notifying a base station device of a gap-generation control signal by the mobile station device; receiving the gap-generation control signal from the mobile station device by the base station device; and generating a gap section in which the base station device does not communicate with the mobile station device by the base station device when the gap-generation control signal is received.

### Effects of the Invention

In the mobile station device of the present invention, the first measuring unit measures a predetermined time, and the first generating unit generates a gap section when it is determined to monitor a peripheral base station device based on a channel quality indication, and then suspends generating another gap section from when the generation of the gap section is initiated to when the first measuring unit finishes measuring the predetermined time. In addition, in the base station device of the present invention, the second measuring unit measures a predetermined period, and the second generating unit that generates a gap section in which the base station device does not communicate with the mobile station device when it is determined to monitor a peripheral base station device based on the channel quality indication of the mobile station device, and then suspends generating another gap section from when the generation of the gap section is initiated to when the second measuring unit finishes measuring the predetermined time.
As a result, the first generating unit of the mobile station device or the second generating unit of the base station device is prevented from generating a gap multiple times, thereby enabling a reduction in gap generation processing and power consumption of the mobile station device and the base station device.

### BRIEF DESCRIPTION OF THE DRAWINGS

FIG. 1 is a schematic view showing an example of a radio frame configuration in E-UTRA downlink based on 3GPP;
FIG. 2 is a graph showing a simulation result of packet-data scheduling in HSDPA as an example;
FIG. 3 is a graph showing an example of a relationship between time and CQI that are monitored by a mobile station device;
FIG. 4 is a graph showing another example of the relationship between time and CQI that are monitored by the mobile station device;
FIG. 5 is a graph showing an example of a relationship between time and CQI that are monitored by a mobile station device according to a first embodiment of the present invention;
FIG. 6 is a block diagram showing a configuration of the mobile station device according to the first embodiment of the present invention;
FIG. 7 is a block diagram showing a configuration of a base station device according to the first embodiment of the present invention;
FIG. 8 is a flowchart showing processing of the mobile station device according to the first embodiment of the present invention;
FIG. 9 is a flowchart showing processing of the base station device according to the first embodiment of the present invention;
FIG 10 is another example of the block diagram showing the configuration of the mobile station device according to the first embodiment of the present invention;
FIG. 11 is another example of the block diagram showing the configuration of the base station device according to the first embodiment of the present invention;
FIG 12 is a flowchart showing processing of the mobile station device shown in FIG. 10;
FIG. 13 is a flowchart showing processing of the base station device shown in FIG. 11;
FIG. 14 is a schematic view showing a monitoring or measuring method of a peripheral base station device in an idle mode when a system frequency band of the base station device is 20 MHz and a frequency band of the mobile station device is 5 MHz;
FIG. 15 is a schematic view showing a monitoring or measuring method of a peripheral base station device in an active mode when a system frequency band of the base station device is 20 MHz and a frequency band of the mobile station device is 5 MHz as an example;
FIG. 16 is a schematic view showing a mobile communication system according to a fourth embodiment of the present invention;
FIG. 17 is a schematic view showing a mobile communication system according to a fifth embodiment of the present invention;
FIG. 18 is a schematic view showing a mobile communication system according to a sixth embodiment of the present invention;
FIG. 19 is a schematic view showing handover processing when the mobile station device moves;
FIG. 20 is a schematic view showing an example of a dedicated channel transmitted from the base station device to the mobile station device; and
FIG 21 is a schematic view showing an example of a conventional gap control method.

### Descriptions of Numerals

- 11: communication unit
- 12: storing unit
- 13: instantaneous-CQI measuring unit
- 14: timer
- 15: control unit
- 16: mode determining unit
- 17: average-CQI calculating unit
- 18: gap generating unit
- 19: count-number setting unit
- 21: communication unit
- 22: storing unit
- 23: timer
- 24: control unit
- 25: mode determining unit
- 26: average-CQI calculating unit
- 27: gap generating unit
- 28: count-number setting unit
- 195: control unit
- 196: gap-generation-control-signal generating unit
- 201: communication unit
- 202: timer
- 203: control unit
- 204: gap generating unit

### BEST MODE FOR CARRYING OUT THE INVENTION

A mobile communication system according to a first embodiment of the present invention is explained.

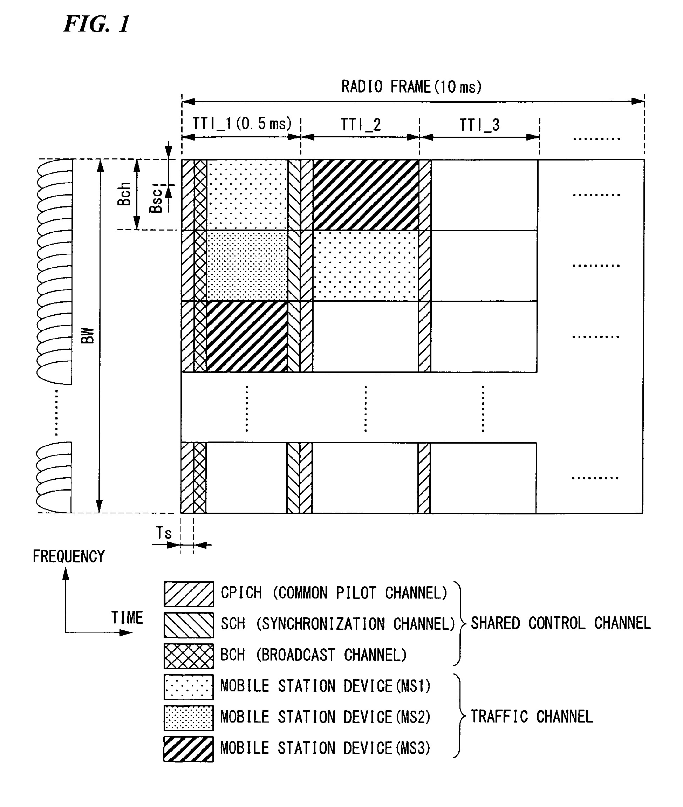

FIG. 1 is a schematic view showing an example of a radio frame configuration in E-UTRA downlink based on 3GPP. As shown in FIG. 1, the horizontal and the vertical axes indicate time and frequency, respectively. The downlink radio frame is a bundle of subcarriers, and includes two-dimensional radio RBs (resource blocks) defined by a frequency bandwidth Bch and a TTI (Transmission Timing Interval). BW, Bch, Bsc, and Ts represent a downlink frequency bandwidth, a resource-block frequency bandwidth, a subcarrier frequency bandwidth, and an OFDM symbol length, respectively.

As shown in FIG 1, CPICH (Common Pilot Channel) is mapped to the head of each TTI, and BCH (Broadcast Channel) and SCH (Synchronization Channel) are mapped to the head of each radio frame. A rest part of each resource block is used as a TCH (Traffic Channel), and mapped to each mobile station device using AMCS.
Upon the power being turned on, the mobile station device receives the synchronization channel from the base station device, and identifies a carrier offset, an OFDM symbol timing, a radio frame timing, a TTI timing, a cell group index/cell index (e.g., scramble-code group index/scramble code index), etc.

Then, the mobile station device receives system broadcast information such as unique information on the base station device over the broadcast channel, enters the idle mode after position registration, and then monitors downlink PICH (Paging Indicator Channel) and a peripheral base station. Upon a call from the base station device, the mobile station device is wirelessly connected to the base station device through PCH (Paging Channel) after the wireless connection procedure, and enters the active mode. Then, the mobile station device measures an instantaneous CQI, and feeds the measured instantaneous CQI back to the base station device. The idle mode indicates a state where the mobile station device is not executing packet data communication with the base station device. The active mode indicates a state where the mobile station device is executing packet data communication with the base station device. Downlink SCCH (Shared Control Channel) may be used in lieu of PICH and PCH.

The base station device receives the instantaneous CQI of each mobile station device, and executes packet data allocation to each resource block of the downlink traffic channel (packet data scheduling). As the packet-data scheduling method, the algorithms of RR (Round Robin), MaxCIR (Maximum CIR), and PF (Proportional Fairness) are known.

RR is a method of equally allocating the resource block of the downlink traffic channel irrespective of the downlink CQI conditions of each mobile station device (user). RR is a method in which fairness is highly prioritized, the effect of AMCS is small, and the average throughput of the entire cell is smallest compared with other methods.
MaxCIR is a method of allocating the resource block of the downlink traffic channel to the mobile station device having the maximum instantaneous CQI. For the mobile station device having a high instantaneous CQI, high throughput is implemented with the AMCS effect, and the downlink average throughput of the entire cell increases. However, little resource block is allocated to the mobile station device having a low instantaneous CQI, the throughput is very small, and unfairness among the mobile station devices is significant.
PF is a method of allocating the resource block of the traffic channel to the mobile station device having an instantaneous CQI greater than the average CQI based on the ratio between the instantaneous CQI and the average CQI. With the resource-block allocation time being substantially equal for each mobile station device, the allocation of resource blocks is implemented preferentially for a user of a preferable CQI. However, the average throughput of the entire cell decreases to some extent, but not to the same extent as RR.

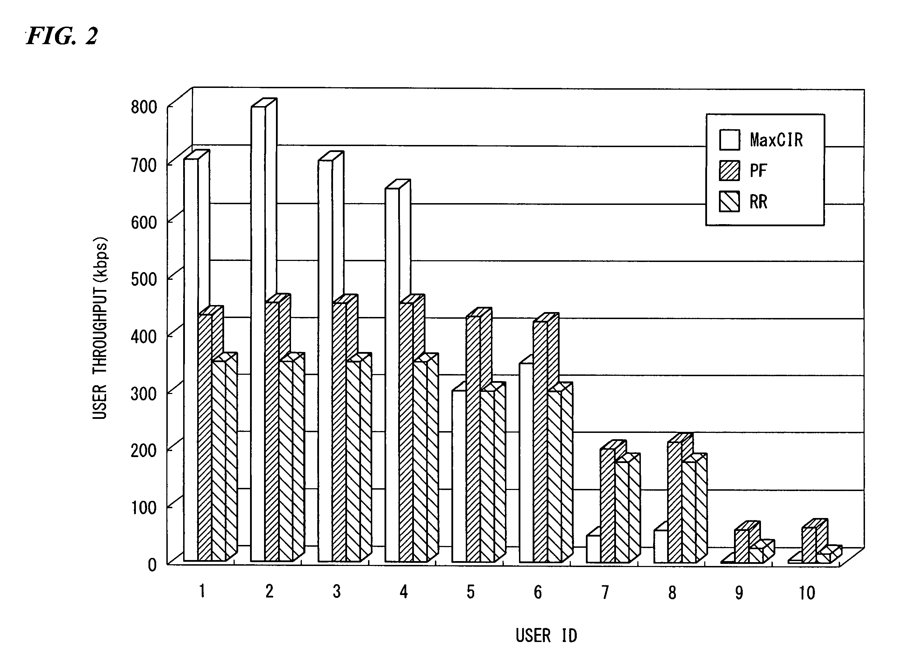

FIG. 2 is a graph showing a simulation result of a packet data scheduling in HSDPA as an example. As shown in FIG. 2, the horizontal and the vertical axes represent a user ID and a user throughput, respectively. A radio link parameter is compliant with 3GPP. The chip rate is 3.84 Mc/sec, the code spreading factor is 16, and the code multiplexed number is 10. The traveling speed of the mobile station device is 3 km/h (on foot), and other cell interference is considered in two-path Rayleigh fading and a 19-cell environment.
The distance from the base station device to the mobile station devices MS 1 and MS 2 is 0.1 (normalized value of a cell radius), the distance to the mobile station devices MS 3 and MS 4 is 0.3, ..., the distance to the mobile station devices MS 9 and MS 10 is 0.9, which are selected randomly from the center cell so that the number of mobile station devices in the active mode is 10. As shown in FIG. 2, since the smaller the user ID (the number of the mobile station device), the closer to the base station device the mobile station device is, the CQI indicates preferable characteristics, thereby implementing a high throughput as a result.

In the PF method, although packet data can be allocated to the mobile station device located at a cell edge, the entire cell throughput decreases. In the MaxCIR method, on the contrary, although the mobile station device located in the proximity of the cell can implement high throughput, little packet data can be allocated to the mobile station device located at a cell edge. A similar result is assumed in the OFDMA method of EUTRA.
With the above simulation result, it is assumed that the mobile station device located at a cell edge has a high possibility of entering the measurement mode, and obtains low throughput even if switching to the active mode in the measurement mode.
In the present embodiment, a gap-generation suspension period (GAP_Interval) that is a parameter for controlling the gap generation period in the measurement mode is set, and the gap generation period (generation interval or generation frequency) in the measurement mode is controlled. It is noted that the measurement mode is set when the average CQI is less than the CQI threshold. The normal mode is set when the average CQI is greater than the CQI threshold.
The measurement mode indicates a state where the mobile station device is wirelessly connected to the base station device, or a state where the mobile station device monitors a peripheral base station device before an inter-cell handover. In addition, the normal mode indicates a state where the mobile station device is wirelessly connected to the base station device without monitoring a peripheral base station device.

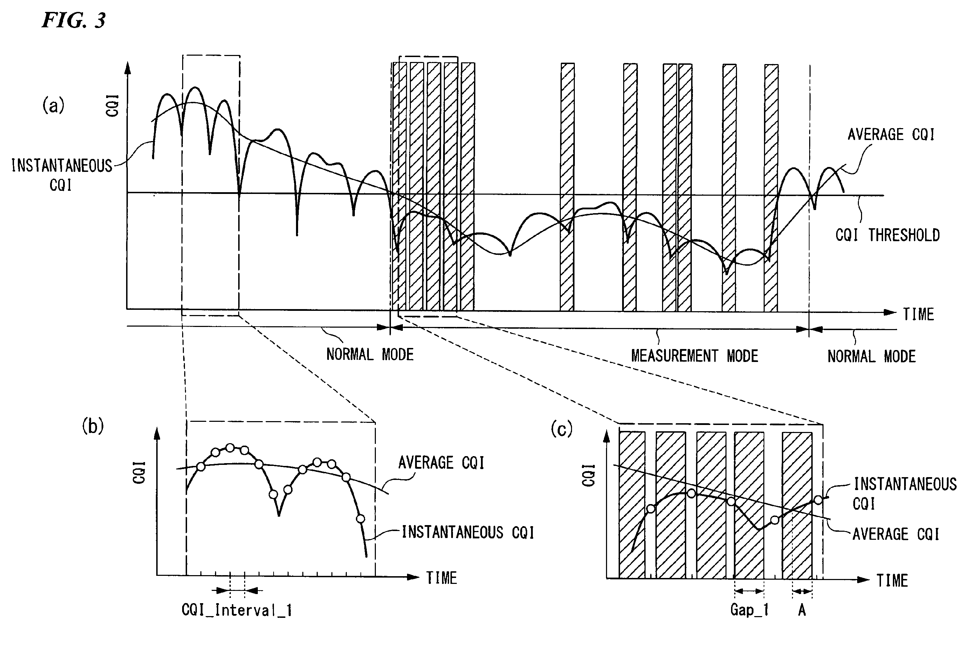

FIGS. 3(a) to 3(c) are graphs showing an example of the relationship between time and CQI that are monitored by the mobile station device. As shown in FIGS. 3(a) to 3(c), the horizontal and the vertical axes represent time and CQI, respectively. Although CQI_Interval_1 that is the instantaneous-CQI measurement period in the normal mode and CQI_Interval_2 that is the instantaneous-CQI measurement period in the measurement mode are set to be the same, these intervals may be set to be different. If the gap section Gap_1 includes a few TTI, for example, 10 TTI with reference to 7 slots (approximately 4.7 ms) in the case of W-CDMA, a section A (shown in FIG. 3 (c)) in which the instantaneous CQI exceeds the average CQI occurs during the gap section Gap_1, which normally means the packet scheduling available section. The base station device has a possibility of being allocated a packet with the use of one instantaneous CQI in the section A. On the other hand, due to the monitoring of peripheral base station devices for multiple times in succession, the power consumption of the mobile station device increases.

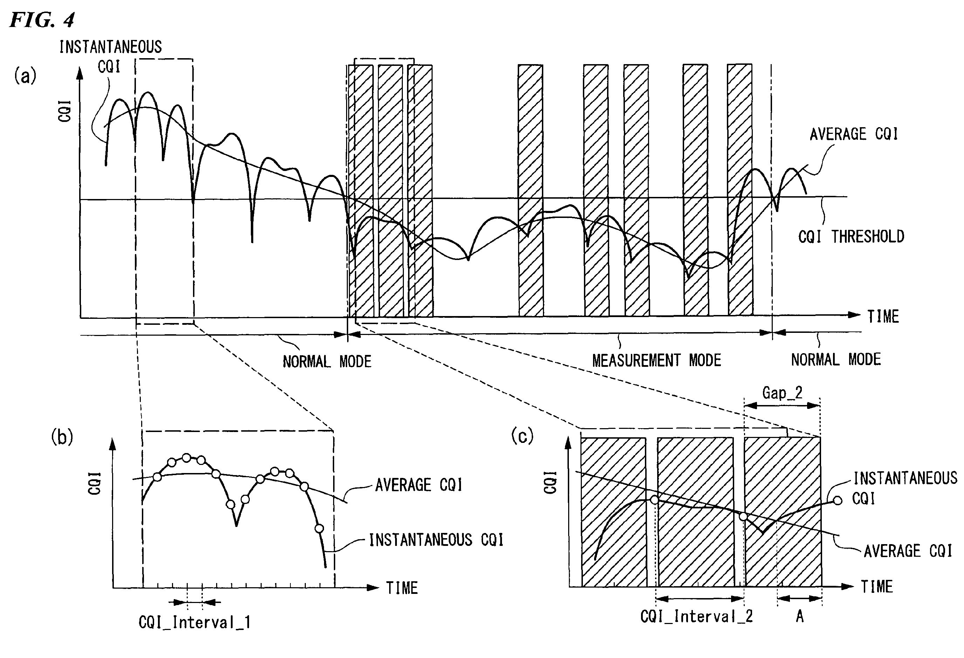

FIGS. 4(a) to 4(c) are graphs showing an example of a relationship between time and CQI that are monitored by the mobile station device. As shown in FIGS. 4(a) to 4(c), the horizontal and the vertical axes represent time and CQI, respectively. In the case where the gap section is long, for example, Gap_2 (shown in FIG. 4(c)) is twice Gap_1 (shown in FIG. 3 (c)), the section A (shown in FIG. 4 (c)) is long, causing further efficiency deterioration of the packet scheduling and an increase in the power consumption of the mobile station device.

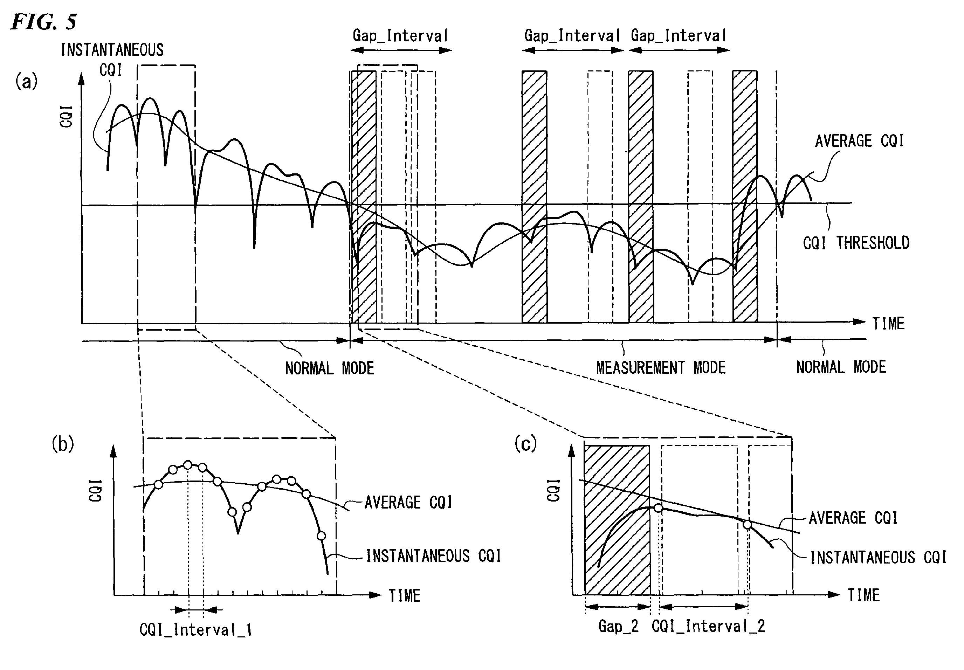

FIGS. 5(a) to 5(c) are graphs showing an example of a relationship between time and CQI that are monitored by a mobile station device according to a first embodiment of the present invention. In the present embodiment, Gap_Interval is set as a gap-generation suspension interval that is a parameter for controlling the gap generation period in the measurement mode. Gap_Interval is longer than the gap section (e.g., Gap_1 and Gap_2), and set as a system parameter in consideration of the packet scheduling efficiency and the power consumption of the mobile station device. This system parameter is output from the mobile station device to the base station device using the broadcast channel or the dedicated control channel.
In addition, this system parameter may be output from the mobile station device to the base station device using the uplink shared control channel or the dedicated control channel. Further, this system parameter may be appropriately updated according to conditions of a radio propagation path, service category, required QoS, etc.

The mobile station device determines whether or not it is the normal mode section or the measurement mode section, and compares the instantaneous CQI measured in the measurement mode section with the average CQI. When the instantaneous CQI is less than the average CQI, the mobile station device generates a gap section, measures the period of Gap_Interval using a timer, switches RF (Radio Frequency), and executes monitoring or measuring of a peripheral base station device. After the given gap section, the mobile station device returns the radio frequency to the previous radio frequency, and resumes the measuring of an instantaneous CQI at the given instantaneous-CQI measurement period (CQI_Interval_1 and CQI_Interval_2). When an instantaneous CQI measured afterward becomes less than the average CQI, the mobile station device refers to Gap_Interval being measured by the timer, and proceeds to the measuring of the next instantaneous CQI when Gap_Interval has not elapsed. When Gap_Interval has elapsed, the mobile station device generates a gap section.

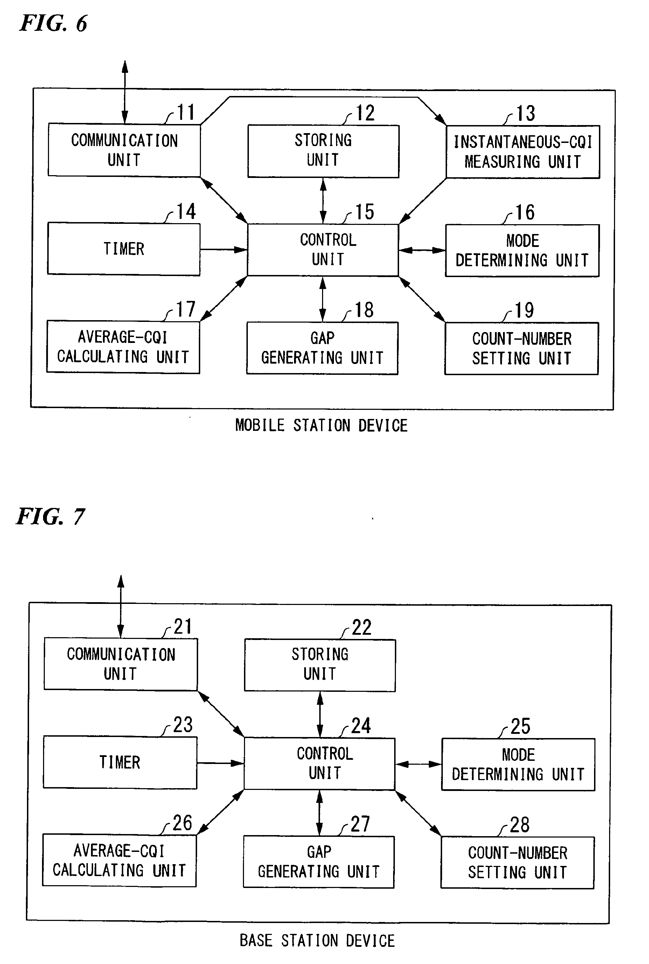

FIG. 6 is an example of a block diagram showing a configuration of the mobile station device according to the first embodiment of the present invention. The mobile station device includes a communication unit 11 (first communication unit), a storing unit 12, an instantaneous-CQI measuring unit 13, a timer 14 (first measuring unit), a control unit 15, a mode determining unit 16 (first mode-determining unit), an average-CQI calculating unit 17 (first-average-value calculating unit), a gap generating unit 18 (first-gap generating unit), and a count-number setting unit 19 (first-interval setting unit).

The communication unit 11 transmits, through radio communication, the instantaneous CQI measured by the instantaneous-CQI measuring unit 13 to the base station device, or receives packet data from the base station device. The storing unit 12 stores the instantaneous CQI measured by the instantaneous-CQI measuring unit 13 for a given period, and a CQI threshold preliminarily set between the base station device and the mobile station device. In addition, the storing unit 12 stores the average CQI calculated from the instantaneous CQI, etc.
The instantaneous-CQI measuring unit 13 measures an instantaneous CQI at a given time. The timer 14 measures time. The control unit 15 controls each unit of the mobile station device. The mode determining unit 16 determines whether to set the mobile station device in the normal mode or in the measurement mode. Specifically, when the average CQI is greater than a CQI threshold, the mode determining unit 16 determines to set the normal mode. When the average CQI is less than a CQI threshold, the mode determining unit 16 determines to set the measurement mode.
The average-CQI calculating unit 17 calculates the average CQI by averaging the plural instantaneous CQIs for a given period that are stored in the storing unit 12. The gap generating unit 18 generates a gap by generating a gap section corresponding to the gap time (Gap_1, Gap_2, etc.).
The count-number setting unit 19 measures Gap_Interval (Gap_Interval_1, Gap_Interval_2, etc.) with reference to the time measured by the timer 14.

FIG. 7 is an example of a block diagram showing a configuration of the base station device according to the first embodiment of the present invention. The base station device includes a communication unit 21 (second communication unit), a storing unit 22, a timer 23 (second measuring unit), a control unit 24, a mode determining unit 25 (second mode-determining unit), an average-CQI calculating unit 26 (second-average-value calculating unit), a gap generating unit 27 (second gap generating unit), and a count-number setting unit 28.
The communication unit 21 receives, through radio communication, the instantaneous CQI transmitted by the mobile station device, and transmits packet data to the mobile station device. The storing unit 22 stores information concerning the instantaneous CQI received by the communication unit 21 for a given period, and the CQI threshold preliminarily set between the base station device and the mobile station device. In addition, the storing unit 22 stores the average CQI.

The timer 23 measures time. The control unit 24 controls each unit of the base station device. The mode determining unit 25 determines whether the mobile station device is in the normal mode or in the measurement mode. Specifically, when the average CQI is greater than the CQI threshold, the mode determining unit 25 determines that the mobile station device is in the normal mode. When the average CQI is less than the CQI threshold, the mode determining unit 25 determines that the mobile station device is in the measurement mode.
The average-CQI calculating unit 26 calculates the average CQI by averaging the plural instantaneous CQIs for the given period that are stored in the storing unit 22. The gap generating unit 27 generates a gap by generating a gap section corresponding to the gap time (Gap_1, Gap_2, etc.). The count-number setting unit 28 measures Gap_Interval (Gap_Interval_1, Gap_Interval_2, etc.) with reference to the time measured by the timer 23.

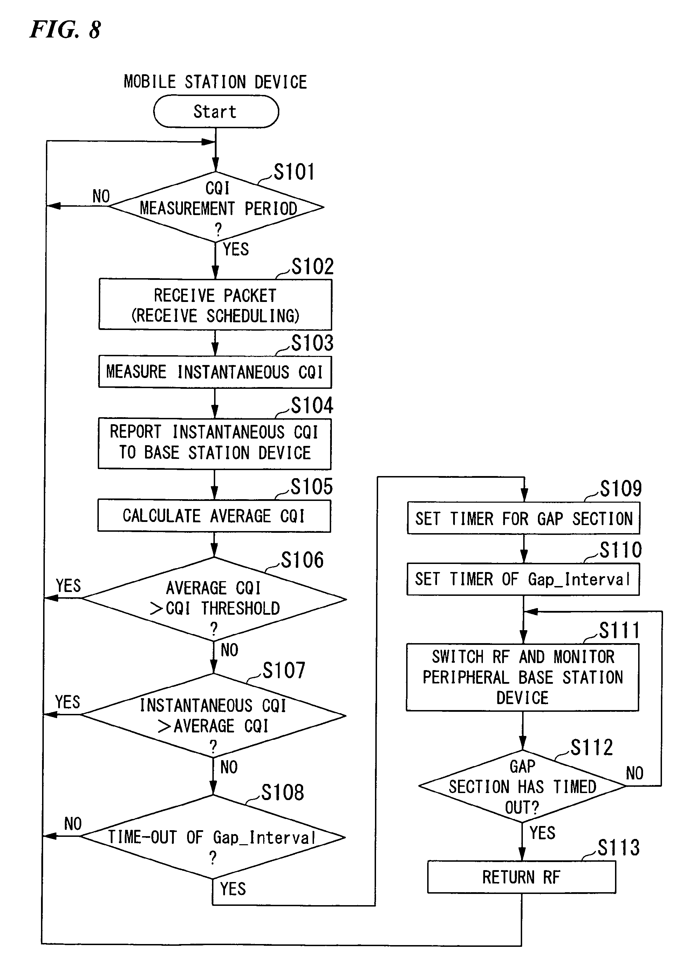

FIG. 8 is a flowchart showing processing of the mobile station device according to the first embodiment of the invention. The processing of this flowchart is executed for controlling the gap generation period (generation frequency) of the mobile station device in the active mode.
Firstly, the control unit 15 determines whether or not the CQI measurement period preliminarily stored in the storing unit 12 has come with reference to the time being measured by the timer 14 (step S101). If the CQI measurement period has not come, the control unit 15 stands by until the CQI measurement period has come. On the other hand, if the CQI measurement period has come, the communication unit 11 receives a packet transmitted from the base station device (step S102), and the instantaneous-CQI measuring unit 13 measures an instantaneous CQI (step S103).
Then, the control unit 15 reports the instantaneous CQI to the base station device by wirelessly transmitting the information concerning the instantaneous CQI measured at step S103 from the communication unit 11 to the base station device (step S104).
In addition, the average-CQI calculating unit 17 calculates an average CQI based on the instantaneous CQI measured at step S103 and the plural instantaneous CQIs for the given period that are stored in the storing unit 12, stores the instantaneous CQI into the storing unit 12, and deletes the instantaneous CQI after a given period has elapsed from the strong unit 12 (step S105).

The control unit 15 determines whether the average CQI calculated at step S105 is greater than the CQI threshold preliminarily stored in the storing unit 12 (step S106). If the average CQI is greater than the CQI threshold, the control unit 15 proceeds to step S101. On the other hand, if the average CQI is less than the CQI threshold, the control unit 15 proceeds to step S107. Then, the control unit 15 determines whether or not the instantaneous CQI measured at step S 102 is greater than the average CQI calculated at step S 104 (step S107). If the instantaneous CQI is greater than the average CQI, the control unit 15 proceeds to step S101. On the other hand, if the instantaneous CQI is less than the average CQI, the control unit 15 determines whether or not Gap_Interval has elapsed based on the time measured by the timer 14 and Gap_Interval stored in the storing unit 12 (step S108). If Gap_Interval has not elapsed, the control unit 15 proceeds to step S101. On the other hand, if Gap_Interval has elapsed, the gap generating unit 18 sets the timer 14 for the period of the gap section, and stores the gap section into the storing unit 12 (step S109). In addition, the control unit 15 sets the timer 14 for Gap_Interval, and stores Gap_Interval into the storing unit 12 (step S110).

Then, the control unit 15 switches the radio frequency that the communication unit 11 utilizes for transmission and reception to and from the base station device, and initiates monitoring of a peripheral base station device (step S111). The control unit 15 determines whether or not the gap section set at step S109 has timed out (step S112). If the gap section has not timed out, the control unit 15 proceeds to step S111. On the other hand, if the gap section has timed out, the control unit 15 returns the radio frequency used for the transmission and reception to and from the base station device to the previous radio frequency before being switched at step S111 (step S113), and proceeds to step S101.

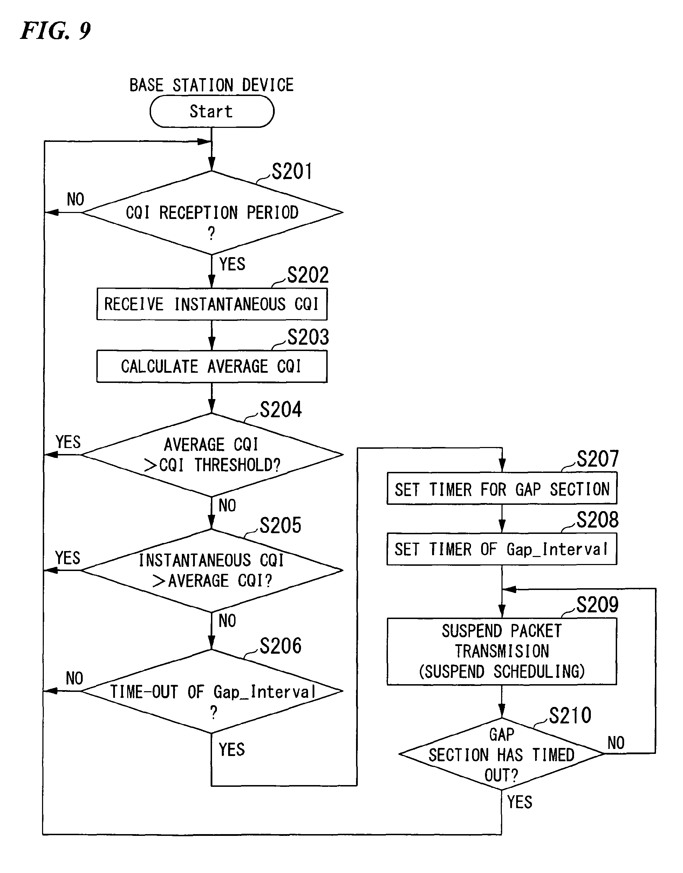

FIG. 9 is a flowchart showing the processing of the base station device according to the first embodiment of the present invention. Firstly, the control unit 24 determines whether or not the CQI reception period preliminarily stored in the storing unit 22 has come (step S201). The CQI reception period is preliminarily set between the base station device and the mobile station device, and stored in the storing unit 22. If the CQI reception period has not come, the control unit 24 stands by until the CQI reception period has come. On the other hand, if the CQI reception period has come, the communication unit 21 receives information concerning the instantaneous CQI from the mobile station device (step S202).
In addition, the average-CQI calculating unit 26 calculates an average CQI base on the instantaneous CQI received at step S202 and the plural instantaneous CQIs for a given period that are stored in the storing unit 22, stores the instantaneous CQI in the storing unit 22, and deletes the instantaneous CQI after a given period has passed from the storing unit 22 (step S203).

The control unit 24 determines whether or not the average CQI calculated at step S203 is greater than the CQI threshold preliminarily stored in the storing unit 22 (step S204). If the average CQI is greater than the CQI threshold, the control unit 24 proceeds to step S201. On the other hand, if the average CQI is less than the CQI threshold, the control unit 24 determines whether or not the instantaneous CQI received at step S202 is greater than the average CQI calculated at step S203 (step S205). If the instantaneous CQI is greater than the average CQI, the control unit 24 proceeds to step S201. On the other hand, If the instantaneous CQI is less than the average CQI, the control unit 24 determines whether or not Gap_Interval stored in the storing unit 23 has elapsed with reference to the time measured by the timer 23 (step S206).

If Gap_Interval has not elapsed, the control unit 24 proceeds to step S201. On the other hand, if Gap_Interval has elapsed, the control unit 24 sets the timer 23 for the period of the gap section, and stores the gap section in the storing unit 22 (step S207). In addition, the control unit 24 sets the timer 23 for the period of Gap_Interval, and stores Gap_Interval in the storing unit 22 (step S208).
Then, the control unit 24 suspends the scheduling by suspending the packet transmission from the communication unit 21 to the mobile station device (step S209). The control unit 24 determines whether or not the gap section set at step S207 has timed out (step S210). If the gap section has not timed out, the control unit 24 proceeds to step S209. On the other hand, if the gap section has timed out, the control unit 24 proceeds to step S201.

The mobile station device according to the first embodiment of the present invention explained above generates a gap section, and then suspends new gap section generation until a given period has elapsed from the time that the gap section generation has been initiated. In addition, the base station according to the first embodiment of the present invention generates a gap section, and then suspends new gap section generation until a given period has elapsed from the time that the gap section generation was initiated.
As a result, the gap generating unit 18 of the mobile station device or the gap generating unit 27 of the base station device is prevented from generating a gap multiple times, thereby enabling a reduction in gap generation processing and power consumption of the mobile station device.

The mobile station device and the base station device that are used in the first embodiment of the present invention control the gap section generation by feedback of the instantaneous CQI from the mobile station device to the base station device, and sharing the instantaneous CQI. However, the feedback and the sharing of the instantaneous CQI are difficult in the FDD (Frequency Division Duplex) system since massive amounts of radio resources are required to accurately notify conditions of the downlink propagation path to the base station device. Therefore, instantaneous CQI simplified and averaged in the frequency region are fed back. For example, the mobile station device feeds, back to the base station device, difference values of the measured instantaneous CQI with respect to the frequency or the time axis, instantaneous CQI of top Mu resource blocks in a good state of the propagation path among Ma resource blocks (Ma>Mu), the number corresponding to AMC (Adaptive Modulation and Coding) such as a modulation method and an encoding rate that are calculated from the instantaneous CQI, etc.
In other words, the mobile station device executes the gap-generation control determination based on the detailed conditions of the downlink propagation path, and outputs the gap-generation control signal to the base station device, thereby enabling more precise or flexible gap-section generation control.
An example of this circuit configuration is explained below. Although, in the circuit configuration below similar to the above embodiment, the gap generation control is executed using the instantaneous CQI for simplicity of explanation, the gap generation control may be executed using another determination criterion.

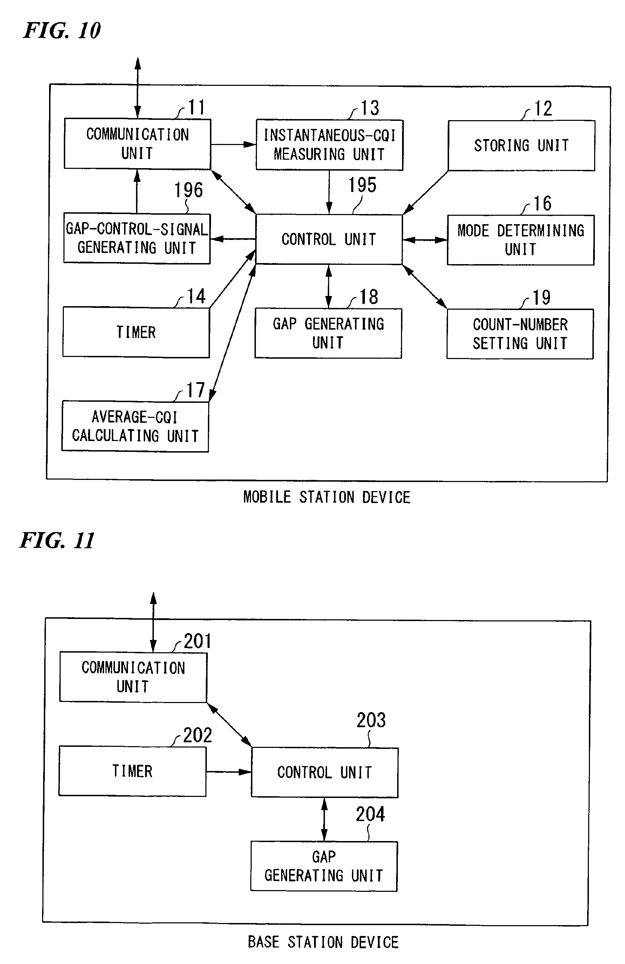

FIG. 10 is another example of the block diagram showing the configuration of the mobile station device according to the first embodiment of the present invention. This mobile station device includes the communication unit 11 (first communication unit), the storing unit 12, the instantaneous-CQI measuring unit 13, the timer 14 (first measuring unit), a control unit 195, the mode determining unit 16 (first mode determining unit), the average-CQI calculating unit 17 (first average-value-calculating unit), the gap generating unit 18 (first gap generating unit), the count-number setting unit 19 (first period setting unit), and a gap-generation-control-signal generating unit 196.
Since the elements other than the control unit 195 and the gap-generation-control-signal generating unit 196 are the same as those of the circuit shown in FIG. 6, the explanation thereof is omitted.
The control unit 195 controls each unit of the mobile station device. The gap-generation-control-signal generating unit 196 generates a signal to notify the base station device that the mobile station device has entered a gap section.

FIG. 11 is another example of the block diagram showing the configuration of the base station device according to the first embodiment of the present invention. This base station device includes a communication device 201 (second communication device), a timer 202 (second measuring unit), a control unit 203, and a gap generating unit 204 (second gap generating unit).
The communication unit 201 receives a gap-generation control signal transmitted from the mobile station device, and transmits and receives packet data to and from the mobile station device through radio communication.
The timer 202 measures time. The control unit 203 controls each unit of the base station device. The gap generating unit 204 generates a gap by generating a gap section for the gap period (Gap_1, Gap_2, etc.).

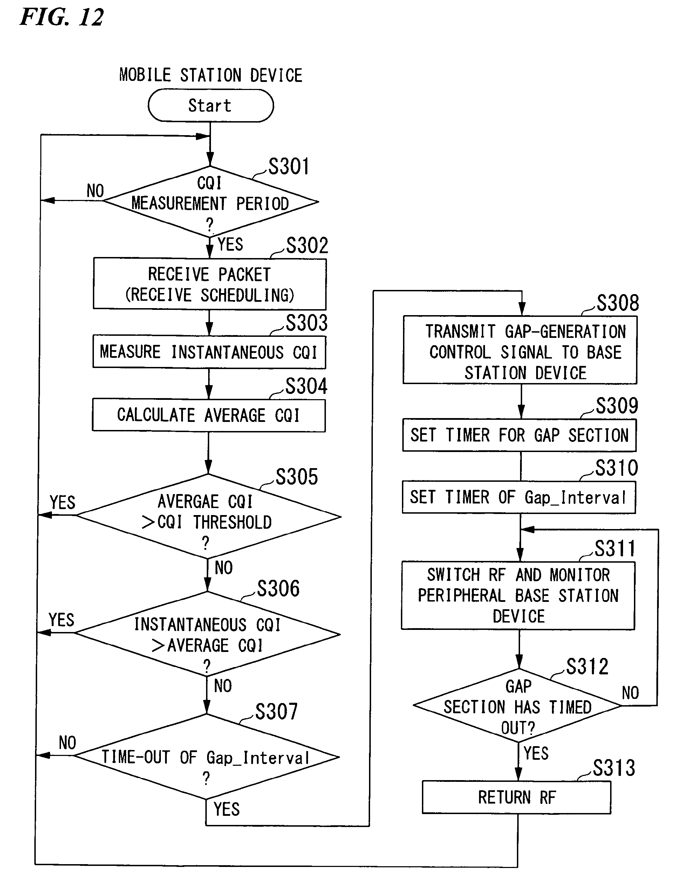

FIG. 12 is a flowchart showing processing of the mobile station device shown in FIG. 10. The processing of this flowchart is executed for controlling a gap generation period (generation frequency) of the mobile station device in the active mode.
Firstly, the control unit 195 determines whether or not the CQI measurement period preliminarily stored in the storing unit 12 has come with reference to the time measured by the timer 14 (step S301). If the CQI measurement period has not come, the control unit 195 stands by until the CQI measurement period has come. If the CQI measurement period has come, the communication unit 11 receives a packet transmitted from the base station device (step S302), the instantaneous-CQI measuring unit 13 measures an instantaneous CQI (step S303).
The average-CQI calculating unit 17 calculates an average CQI based on the instantaneous CQI measured at step S303, and the plural instantaneous CQIs for a given period that are stored in the storing unit 12, stores the instantaneous CQI in the storing unit 12, and deletes the instantaneous CQI after a given period has elapsed from the storing unit 12 (step S304).

The control unit 195 determines whether or not the average CQI calculated at step S304 is greater than the CQI threshold preliminarily stored in the storing unit 12 (step S305). If the average CQI is greater than the CQI threshold, the control unit 195 proceeds to step S301. On the other hand, if the average CQI is less than the CQI threshold, the control unit 195 proceeds to step S306. Then, the control unit 195 determines whether or not the instantaneous CQI measured at step S303 is greater than the average CQI calculated at step S304 (step S306). If the instantaneous CQI is greater than the average CQI, the control unit 195 proceeds to step S301. On the other hand, if the instantaneous CQI is less than the average CQI, the control unit 195 determines whether or not Gap_Interval has elapsed based on the time measured by the timer 14 and Gap_Interval stored in the storing unit 12 (step S307). If Gap_Interval has not elapsed, the control unit 195 proceeds to step S301. On the other hand, if Gap_Interval has elapsed, the control unit 195 instructs the gap-generation-signal generating unit 196 to generate a gap-generation control signal, and transmits the gap-generation control signal from the communication device 11 to the base station device (step S308).

The gap generating unit 18 sets the timer 14 for the period of the gap section, and stores the gap section into the storing unit 12 (step S309). In addition, the control unit 195 sets the timer 14 for the period of Gap_Interval, and stores Gap_Interval into the storing unit 12 (step S310).
Then, the control unit 195 switches the radio frequency that the communication unit 11 utilizes for transmission and reception to and from the base station device, and initiates monitoring of a peripheral base station device (step S311). The control unit 195 determines whether or not the gap section set at step S309 has timed out (step S312). If the gap section has not timed out, the control unit 195 proceeds to step S311. On the other hand, if the gap section has timed out, the control unit 195 returns the radio frequency used for the transmission and reception to and from the base station device to the previous radio frequency before being switched at step S311 (step S313), and proceeds to step S301.

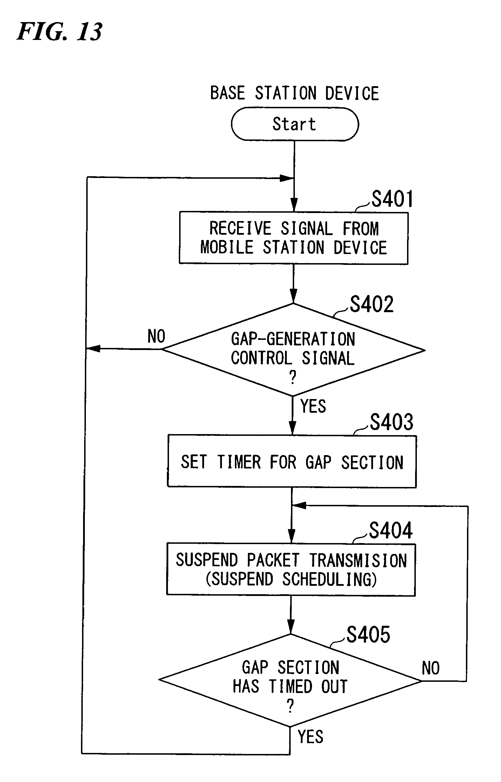

FIG 13 is a flowchart showing processing of the base station device shown in FIG. 20. The communication unit 21 receives a signal from the mobile station device (step S401). If the signal received from the mobile station is the gap-generation control signal, the control unit 203 proceeds to step S403, and if not, proceeds to step S401 (step S402).
If the signal received from the mobile station device is the gap-generation control signal, the control unit 203 sets the timer 202 for the period of the gap section (step S403).
Then, the control unit 203 suspends the scheduling by suspending the packet transmission from the communication unit 201 to the mobile station device (step S404). The control unit 203 determines whether or not the gap section set as step S403 has timed out (step S405). If the gap section has not timed out, the control unit 203 proceeds to step S404. On the other hand, if the gap section has timed out, the control unit 203 proceeds to step S401.

Although omitted in the above explanation, it is preferable that the processing continues after the base station device transmits an ACK signal back to the mobile station device when the mobile station device transmits the gap-generation control signal to the base station device. In other words, although it is possible to generate a gap without the response of the ACK signal, packet data addressed to the mobile station device might be transmitted in the gap section when the gap-generation control signal is not correctly transmitted to the base station device.
As explained above, when the mobile station device executes the gap generation determination, and notifies the signaling control signal (gap-generation control signal) to the base station device in addition to feeding the instantaneous CQI back to the base station device, power consumption of the mobile station device can be reduced.

Hereinafter, a mobile communication system according to a second embodiment of the present invention is explained. Explanation of elements in the second embodiment similar to those in the first embodiment is omitted. In the present embodiment, a gap generation period in the active mode is controlled for Intra-RAT-HO (and Intra-Freq-HO).
In EUTRA/EUTRAN, mobile station devices having different frequency bands (e.g., 1.25 MHz, 2.5 MHz, 5 MHz, 10 MHz, 15 MHz, and 20 MHz) belong to base station devices having different system frequency bands (e.g., 1.25 MHz, 2.5 MHz, 5 MHz, 10 MHz, 15 MHz, and 20 MHz). For the mobile station devices that belong to different system frequency bands and have different frequency bands, a monitoring and measuring method of a peripheral base station device in the idle mode and the active mode for Intra-RAT-HO (and Intra-Freq-HO) has been proposed (NTT DoCoMo, Inc., "Cell Search Method in Connected and Idle Mode for E-UTRA Downlink", 3GPP TSG RAN WG1 LTE Ad Hoc Meeting, Helsinki, Finland, 23-25, January, 2006).

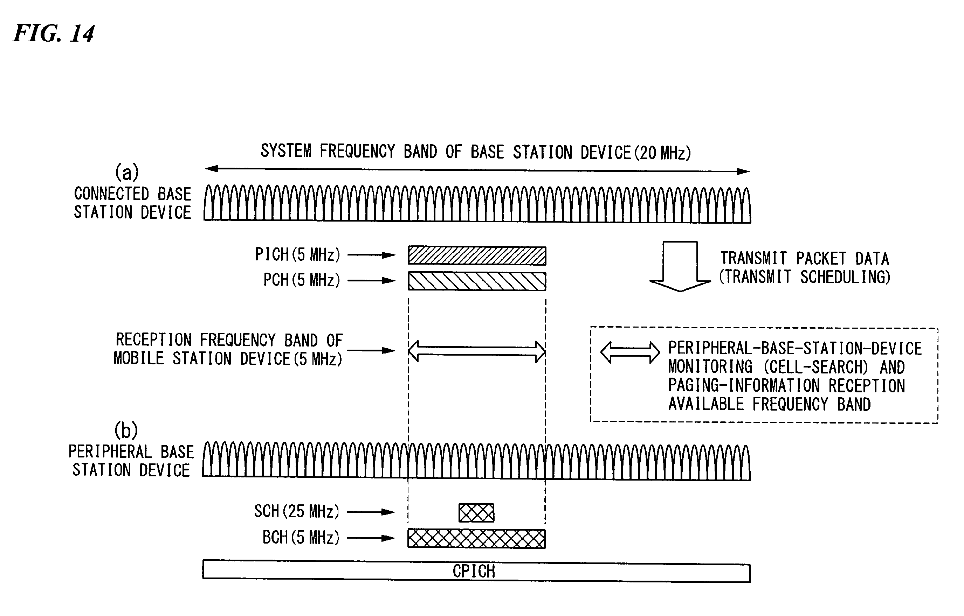

FIGS. 14 (a) and 14 (b) are schematic views showing the monitoring and measuring method of a peripheral base station device in the idle mode when the system frequency band of the base station device is 20 MHz and the frequency band of the mobile station device is 5 MHz. Since the broadcast channel and the synchronization channel are symmetrically mapped to the center of the system frequency band of the base station device, an initial monitoring of the base station device (initial cell search) when the power of the mobile station device is turned on, and a monitoring of a peripheral device in the idle mode (peripheral search) are executed using the center frequency band of the base station device (e.g., 1.25 MHz, 5 MHz). On the other hand, when a call is detected by the reception of paging information through the paging indicator channel and the paging channel, the mobile station device enters the active mode by shifting the frequency band to a predetermined allocated frequency band according to an instruction of the base station device (frequency shift).

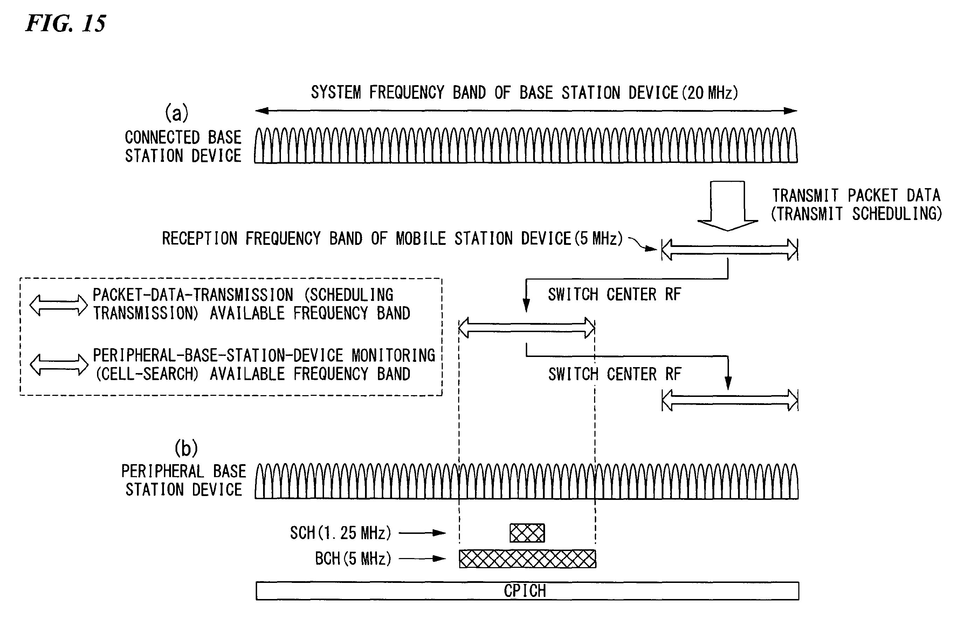

FIGS. 15 (a) and 15 (b) are schematics showing a monitoring or measuring method of a peripheral base station device in the active mode when the system frequency band of the base station device is 20 MHz and the frequency band of the mobile station device is 5 MHz as an example. The mobile station device receives packet data in a predetermined frequency band in the active mode, and executes the instantaneous CQI measurement at a given CQI measurement period and the feedback to the base station device. Since the broadband channel and the synchronization channel are mapped symmetrically to the center of the system frequency band of the base station device, it is necessary to execute monitoring of a peripheral base station device in the active mode (peripheral search) in the center frequency band of the base station device (e.g., 1.25 MHz and 5 MHz), thereby necessitating switching of the radio frequency of the mobile station device.

For a handover between the base station devices utilizing the same frequency band in the EUTRA/EUTRAN system, i.e., Intra-RAT-HO (and Intra-Freq-HO), switching of the radio frequency of the mobile station device occurs similarly to Intra-RAT-HO (and Inter-Freq-HO) explained in the first embodiment, and the gap generation for monitoring or measuring a peripheral base station device is necessary.
In the present embodiment, the gap-generation-period control method in the active mode shown in the first embodiment is applied for Intra-RAT-HO (and Intra-Freq-HO). The control operation is the same as the method explained in the first embodiment, therefore, the explanation thereof will be omitted.

Hereinafter, a mobile communication system according to a third embodiment of the present invention is explained. In the present embodiment, a gap generation period in the active mode is controlled for Intra-RAT-HO (and Inter-Freq-HO), Inter-RAT-HO (and Inter-Freq-HO), and Intra-RAT-HO (Intra-Freq-HO).
As explained in the first embodiment, Gap_Interval that is the parameter for controlling the gap generation period in the measurement mode is set for Intra-RAT-HO (and Inter-Freq-HO), Inter-RAT-HO (and Inter-Freq-HO), and Intra-RAT-HO (and Intra-Freq-HO) in the present embodiment.
Although a value that is longer than the gap section (e.g., Gap_1 and Gap_2) is set as Gap_Interval to enhance the packet scheduling efficiency and the power consumption of the mobile station device, the gap generation period in the measurement mode becomes longer due to the setting of Gap_Interval. In other words, the gap generation frequency becomes smaller. Due to the longer gap generation period, the peripheral-base-station-device monitoring frequency of the mobile station device can be reduced.

Hereinafter, a mobile communication system according to a fourth embodiment is explained. In the first embodiment, the value of Gap_Interval in the measurement mode is fixed. However, the average CQI varies in the measurement mode, and the possibility of a handover increases as the average CQI becomes lower.
Accordingly, in the present embodiment, Gap_Interval_1 and Gap_Interval_2 are set to Gap_Interval where Gap_Interval_1> Gap_Interval_2.

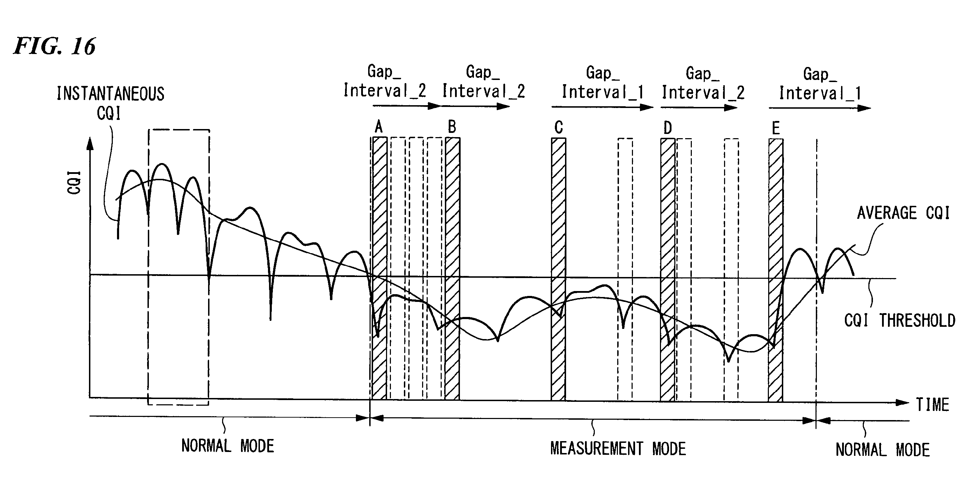

FIG 16 is a schematic view showing the mobile communication system in the fourth embodiment of the present invention. Similar to the first embodiment, in the measurement mode, the mobile station device compares the measured instantaneous CQI with the average CQI, generates a gap section when the instantaneous CQI is smaller than the average CQI, and sets the timer for the period of Gap_Interval. At this time, if the average CQI and the average CQI of a given period before are compared, and the average CQI of the given period before is smaller than the average CQI, Gap_Interval_1 is set to Gap_Interval. Meanwhile, if the average CQI of the given period before is greater than the average CQI, Gap_Interval_2 is set to Gap_Interval. Subsequent processing is similar to that of the first embodiment, therefore the explanation thereof will be omitted.

Thus, the two kinds of Gap_Interval are provided, and the average CQI is compared with the average CQI of a given period before. If the average CQI continues to be lower, in other words, the possibility of a handover is high, the short Gap_Interval (Gap_Interval_2) is set to Gap_Interval (points A, B, and D in the case of FIG. 16). If the average CQI continues to be higher, in other words, the possibility of a handover is low, the long Gap_Interval (Gap_Interval_1) is set to Gap_Interval (points C and E in the case of FIG. 16). As a result, the mobile station device can efficiently monitor or measure a peripheral base station device. Although the two kinds of Gap_Interval are set here, it is not limited hereto, and the same effect can be obtained by setting multiple Gap_Intervals based on a difference value of the average CQI of a given period before and the average CQI.

Hereinafter, a mobile communication system according to a fifth embodiment of the present invention is explained. In the first embodiment, the value of Gap_Interval in the measurement mode is fixed. However, the average CQI varies in the measurement mode, and the possibility of a handover increases as the average CQI becomes lower.
Accordingly, in the present embodiment, another Gap threshold is provided and a CQI value that is lower than the aforementioned CQI threshold is set to the Gap threshold. In addition, Gap_Interval_1 and Gap_Interval_2 are set to Gap_Interval where Gap_Interval_1> Gap_Interval_2.

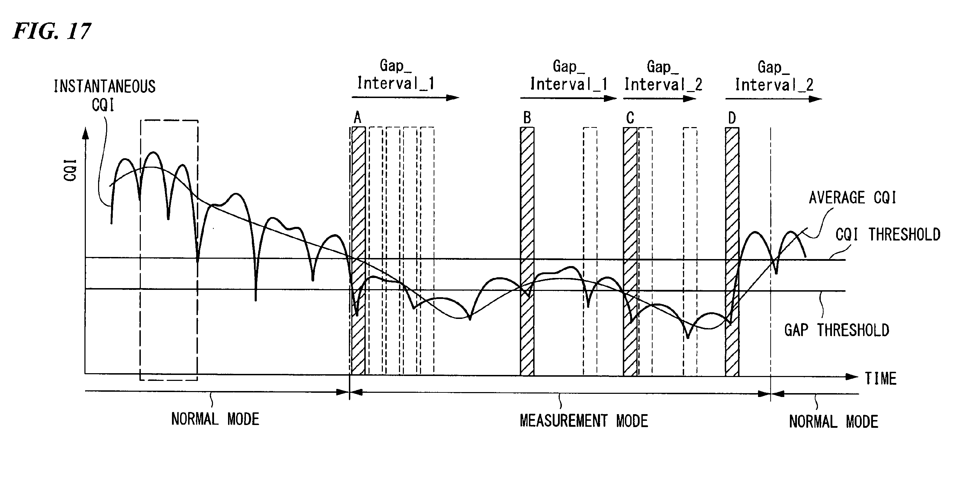

FIG. 17 is a schematic view showing the mobile communication system in the fifth embodiment of the present invention. In the measurement mode similar to the first embodiment, the mobile station device compares the measured instantaneous CQI with the average CQI, generates a gap section when the instantaneous CQI is smaller than the average CQI, and sets the timer for the period of Gap_Interval. At this time, if the average CQI and the Gap threshold are compared, and the average CQI is greater than the Gap threshold, Gap_Interval_1 is set to Gap_Interval (points A and B in the case of FIG. 17). Meanwhile, if the average CQI is smaller than the Gap threshold, Gap_Interval_2 is set to Gap_Interval (points C and D in the case of FIG. 17). Subsequent processing is similar to that of the first embodiment, therefore, the explanation thereof will be omitted.

Thus, the two kinds of Gap_Interval are provided, and if the average CQI is smaller than the Gap threshold, in other words, the possibility of a handover is high, the short Gap_Interval (Gap_Interval_2) is set to Gap_Interval. If the average CQI is greater than the Gap threshold, in other words, the possibility of a handover is low, the long Gap_Interval (Gap_Interval_1) is set to Gap_Interval. As a result, the mobile station device can efficiently monitor or measure a peripheral base station device. Although only one Gap section threshold is set here, it is not limited hereto, and the same effect can be obtained by setting plural Gap thresholds so that Gap_Interval is set shorter as the gap section threshold is smaller.

Hereinafter, a mobile communication system according to a sixth embodiment is explained. In the fourth and the fifth embodiments, a method for the mobile station device to efficiently monitor or measure the peripheral base station device by providing plural values of Gap_Interval in the measurement mode has been explained. In the present embodiment, the Gap threshold is provided similar to the fifth embodiment, and Gap_Interval_1, Gap_Interval_2, and Gap_Interval_3 are set to Gap_Interval where Gap_Interval_1>Gap_Interval_2>Gap_Interval_3.

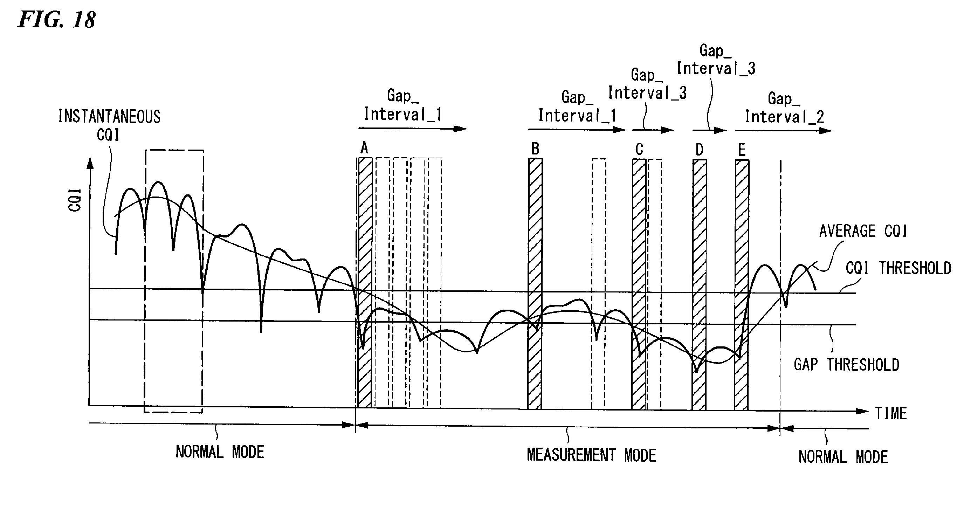

FIG. 18 is a schematic view showing the mobile communication system according to the sixth embodiment of the present invention. When the average CQI and the Gap threshold are compared, and the average CQI is greater than the Gap threshold, Gap_Interval_1 is set to Gap_Interval (points A and B in the case of FIG. 18). When the average CQI is smaller than the Gap threshold, the average CQI of a given period before and the average CQI are compared. When the average CQI continues to be lower, Gap_Interval_3 is set to Gap_Interval (points C and D in the case of FIG. 18). When the average CQI continues to be higher, Gap_Interval_2 is set to Gap_Interval (point E in the case of FIG 18). The subsequent processing is similar to that of the first embodiment, therefore, the explanation thereof will be omitted.

Since the system requirements for Intra-RAT-HO (and Intra-Freq-HO), Intra-RAT-HO (and Inter-Freq-HO), and Inter-RAT-HO (and Inter-Freq-HO) are different in the first to the sixth embodiments, the values of Gap_Interval may be set different. The value of Gap_Interval is stored in the storage units of the base station device and the mobile station device as the preliminarily defined system parameter, or output from the base station device to the mobile station device with the use of the broadcast channel. The base station device may determine service conditions, required QoS, etc., adaptively update the value of Gap_Inerval, and notify the mobile station device of the updated value. Alternatively, the mobile station device may execute the above determination, and notify the base station device of the updated value.
Although application to an FDD (Frequency Division Duplex) mode of the EUTRA/EUTRAN system is explained in the first to sixth embodiments, it may be applied to a TDD (Time Division Duplex) mode.
In addition, although the gap generation control is executed by measuring the gap intermission (Gap_Interval), i.e., by measuring time in the first to the sixth embodiments, another element such as a gap-generation frequency measured using a counter can be included in the control elements.
Further, although the gap control is executed by sharing the information concerning the instantaneous CQI between the base station device and the mobile station device in the present invention, the mobile station device may determine the necessity or lack thereof of gap generation through the mode determining unit and a gap determining unit, and executes the gap control through the uplink and the downlink signaling control channel. In other words, the mobile station device may output the gap generation signal directly to the base station device. In this case, a gap generation adjustment between the base station device and the mobile station device such as the separate transmission of a value of Gap_Interval is necessary.

The program executed by the base station device and the mobile station device in the first to sixth embodiments is a program for controlling the CPU, etc., to execute the gap generation method related to these embodiments (program causing a computer to function). The information utilized by these devices is temporarily stored in RAM upon the processing, then stored in various ROMs or HDDs, read by the CPU according to need, and modification or writing is executed.
A recording medium for storing the program may be any of a semiconductor medium (such as ROM, a nonvolatile memory card), an optical recording medium (such as a DVD, an MO, an MD, a CD, and a BD), a magnetic recording medium (such as magnetic tape or a flexible disc), etc.
Not only the functions of the embodiments are implemented by executing the loaded program, but the functions of the mobile station device and the base station device are implemented by the processing with an operating system or another application program based on the instruction of the program in some cases.
Upon distribution to the market, the program can be stored in a portable recording medium to be distributed, or transmitted to a server connected through a network such as the Internet. In this case, a storage device of the server is included in the recording medium of the present embodiment.

Although the embodiments of the present invention are explained above, the configuration is not limited thereto, and different configurations may be used without departing from the scope of the present invention.

## Claims

1. A mobile communication system that generates a gap section based on a channel quality indication, wherein
the mobile communication system determines a timing or a frequency of generating the gap section based on a given parameter between a base station device and a mobile station device.

2. The mobile communication system according to claim 1, wherein a gap generation intermission is used as the given parameter, the gap generation intermission being an interval for which the gap section is not generated.

3. A mobile communication system including a mobile station device and a base station device,
the mobile station device comprising:
a first measuring unit that measures a predetermined time; and
a first generating unit that generates a gap section when it is determined to monitor a peripheral base station device based on a channel quality indication, and then suspends generating another gap section from when the generation of the gap section is initiated to when the first measuring unit finishes measuring the predetermined time, and
the base station device comprising:
a second measuring unit that measures a predetermined period; and
a second generating unit that generates a gap section in which the base station device does not communicate with the mobile station device when it is
determined to monitor the peripheral base station device based on the channel quality indication of the mobile station device, and then suspends generating another gap section from when the generation of the second gap section is initiated to when the second measuring unit finishes measuring the predetermined period.

4. A mobile communication system including a mobile station device and a base station device,
the mobile station device comprising:
a first measuring unit that measures a predetermined time;
a first generating unit that generates a gap section when it is determined to monitor a peripheral base station device based on a channel quality indication, and then suspends generating another gap section from when the generation of the gap section is initiated to when the first measuring unit finishes measuring the predetermined time; and
a notifying unit that notifies the base station device of a gap-generation control signal, and
the base station device comprising:
a radio unit that receives the gap-generation control signal from the mobile station device; and
a second generating unit that generates a gap section in which the base station device dose not communicate with the mobile station device when the gap-generation control signal is received.

5. A mobile station device that wirelessly communicates with a base station device, comprising:
a first measuring unit that measures a predetermined time; and
a first generating unit that generates a gap section when it is determined to monitor a peripheral base station device based on a channel quality indication, and then suspends generating another gap section from when the generation of the gap section is initiated to when the first measuring unit finishes measuring the predetermined time.

6. A mobile station device that wirelessly communicates with a base station device, comprising:
a first measuring unit that measures a predetermined time;
a first generating unit that generates a gap section when it is determined to monitor a peripheral base station device based on a channel quality indication, and then suspends generating another gap section from when the generation of the gap section is initiated to when the first measuring unit finishes measuring the predetermined time; and
a notifying unit that notifies the base station device of a gap section generation.

7. The mobile station device according to claim 5 or 6, further comprising:
a first communication unit that transmits, to the base station device, downlink instantaneous channel-quality-indication values from the base station device to the mobile station device;
a first calculating unit that calculates an average value of the instantaneous channel-quality-indication values for a given period; and
a first setting unit that sets the predetermined time based on a temporal transition of the average value.

8. The mobile station device according to claim 7, wherein the first setting unit sets the predetermined time based on the average value.

9. The mobile station device according to claim 7, wherein the setting unit sets the predetermined time based on the temporal transition of the average value and the average value.

10. A base station device that wirelessly communicates with a mobile station device, comprising:
a second measuring unit that measures a predetermined period; and
a second generating unit that generates a gap section in which the base station device ceases to communicate with the mobile station device when it is determined to monitor a peripheral base station device based on a channel quality indication of the mobile station device, and then suspends generating another gap section from when the generation of the gap section is initiated to when the second measuring unit finishes measuring the predetermined time.

11. A base station device that wirelessly communicates with a mobile station device, comprising:
a radio unit that receives a gap generation signal from a mobile station device; and
a second generating unit that generates a gap section in which the base station device ceases to communicate with the mobile station device when the gap generation signal is received.

12. The base station device according to claim 10, further comprising:
a second communication unit that receives, from the mobile station device, downlink instantaneous channel-quality-indication values from the base station device to the mobile station device;
a second calculating unit that calculates an average value of the instantaneous channel-quality-indication values for a given period; and
a second setting unit that sets the predetermined period based on a temporal transition of the average value.

13. The base station device according to claim 12, wherein the second setting unit sets the predetermined period based on the average value.

14. The base station device according to claim 12, wherein the second setting unit sets the predetermined period based on a temporal transition of the average value and the average value.

15. A mobile communication method, comprising:
generating a gap section when it is determined to monitor a peripheral base station device based on a channel quality indication;
suspending another gap generation of a mobile station device from when the generation of the gap section is initiated to when a predetermined time has elapsed;
generating a gap section in which a base station device ceases to communicate with the mobile station device when it is determined to monitor the peripheral base station device based on the channel quality indication of the mobile station device; and
suspending another gap generation of the base station device when the generation of the gap section is initiated to when a predetermined period has elapsed.

16. A mobile communication method, comprising:
generating a gap section when it is determined to monitor a peripheral base station device based on a channel quality indication;
suspending another gap generation of a mobile station device from when the generation of the gap section is initiated to when a predetermined time has elapsed;
notifying a base station device of a gap-generation control signal by the mobile station device;
receiving the gap-generation control signal from the mobile station device by the base station device; and
generating a gap section in which the base station device does not communicate with the mobile station device by the base station device when the gap-generation control signal is received.
